# EUROPÄISCHE PATENTSCHRIFT

(11) **EP 0 800 087 B1**
(45) Veröffentlichungstag und Bekanntmachung des Hinweises auf die Patenterteilung: **17.12.2003**
(21) Anmeldenummer: 96117375.4
(22) Anmeldetag: 30.10.1996
(51) Int. Cl.: G01P 3/488

(54) **Drehzahlsensor**
Rotary speed sensor
Capteur de vitesse angulaire

(30) Priorität: 28.03.1996 DE 19612337
(43) Veröffentlichungstag der Anmeldung: 08.10.1997
(73) Patentinhaber: Siemens Aktiengesellschaft, 80333 München (DE)
(72) Erfinder: Kaltenbach, Dirk, 65189 Wiesbaden (DE)

(56) Entgegenhaltungen:
- EP-A- 0 560 381
- DE-A- 4 141 958
- GB-A- 2 176 616

## Beschreibung

Die Erfindung betrifft einen Drehzahlsensor mit einem zwei Hallsensoren und eine Meßfläche aufweisenden Hallchip und mit einem auf der der Meßfläche abgewandten Seite des Hallchips zur Erzeugung eines gleichmäßigen magnetischen Feldes an den Hallsensoren zur Justage bewegbar gehaltenen Magneten, welcher die Form eines Zylinders hat, an seinen Stirnflächen jeweils einen Magnetpol aufweist und mit einer Stirnfläche unmittelbar an dem Hallchip anliegt.

Solche Drehzahlsensoren werden beispielsweise zur Erfassung einer Drehzahl oder eines Stellwinkels eines Zahnrades in einem Getriebe eines Kraftfahrzeuges eingesetzt und sind damit bekannt. Hierzu wird der Drehzahlsensor gegenüber dem Zahnrad derart angeordnet, daß ein Zahn des Zahnrades bei einer Drehbewegung zuerst den ersten und anschließend den zweiten Hallsensor passiert. Von dem Magneten wird im Bereich der Hallsensoren ein magnetisches Feld erzeugt, welches sich beim Passieren eines Zahns des Zahnrades verändert. Die Hallsensoren erfassen die Änderung des magnetischen Feldes und erzeugen elektrische Signale, aus denen sich die Drehzahl oder ein Stellwinkel des Zahnrades ermitteln läßt. Der maximal mögliche Abstand zwischen der Meßfläche und dem Zahnrad ist abhängig von der Stärke des an den Hallsensoren erzeugten magnetischen Feldes. Dieser maximale Abstand wird häufig als maximaler Funktionsabstand bezeichnet.

Da der Magnet nicht immer homogen ist und keine exakt planparallelen Stirnflächen hat, erzeugt er unterschiedliche magnetische Felder an den Hallsensoren. Durch diese unterschiedlichen magnetischen Felder entstehen fehlerhafte Meßwerte des Hallchips. Um diese fehlerhaften Meßwerte zu vermeiden, wird der Drehzahlsensor durch ein Bewegen des Magneten in Richtung des seitlichen Abstandes der Hallsensoren justiert, bis an den Hallsensoren annähernd gleiche magnetische Felder vorhanden sind.

Nachteilig ist hierbei die recht aufwendige Justage und daß der Magnet eine Führung benötigt, die sehr viel Platz beansprucht. Weiterhin lassen sich durch das Verschieben des Magneten nicht immer gleichmäßige magnetische Felder an den Hallsensoren einstellen. Dies ist insbesondere dann der Fall, wenn der Magnet in Richtung der Führung keilförmig gestaltet ist oder eine gleichmäßig abfallende magnetische Feldstärke hat.

Man hat bereits daran gedacht, den Magneten auf seiner dem Hallchip zugewandten Stirnfläche mit einer nach innen gerichteten Wölbung zu versehen oder zwischen dem Magneten und dem Hallchip einen Diffusor anzuordnen. Dies verringert jedoch die an den Hallsensoren erzeugte magnetische Feldstärke und führt dazu, daß der maximale Funktionsabstand verringert wird.

Der Erfindung liegt das Problem zugrunde, einen Drehzahlsensor der eingangs genannten Art so zu gestalten, daß er möglichst einfach zu justieren ist.

Dieses Problem wird erfindungsgemäß dadurch gelöst, daß der Magnet gegenüber dem Hallchip verdrehbar gehalten ist, und auf seiner dem Hallchip Abgewandten Stirnfläche eine Aufnahme für ein Drehwerkzeug hat, wobei die Aufnahme als in den Magneten eingearbeiteter Schlitz ausgebildet ist.

Der Magnet läßt sich zur Justage einfach verdrehen, da er auf seiner dem Hallchip abgewandten Stirnfläche eine Aufnahme für ein Drehwerkzeug hat. Diese Aufnahme ist ein in den Magneten eingearbeiteter Schlitz für beispielsweise einen Schraubendreher. Dieser Schlitz erzeugt eine Inhomogenität der Feldstärke des Magneten. Diese Inhomogenität ermöglicht auch dann eine Justage des Drehzahlsensors, wenn die dem Magneten zugewandte Fläche des Hallchips nicht genau planparallel zu seiner Meßfläche ist und der Magnet ansonsten besonders homogen ist.

Desweiteren benötigt der Magnet keine aufwendige längliche Führung und läßt sich besonders platzsparend in dem Drehzahlsensor anordnen. Durch ein einfaches Verdrehen des Magneten wird der Drehzahlsensor besonders einfach justiert. Bei nicht planparallelen Stirnflächen oder einer über die Stirnflächen gleichmäßig abfallende magnetische Feldstärke ist dank der Erfindung immer eine Position des Magneten vorhanden, bei dem die magnetische Vorspannung beider Hallsensoren gleich ist.

Heutige Magnete haben in der Regel eine relativ genaue Zylinderform und eine hohe Homogenität. Ein solcher Magnet hat daher im Zentrum seiner Stirnflächen häufig eine gleichmäßige magnetische Feldstärke. Auf die Justage des Drehzahlsensors kann bei derartigen Magneten teilweise verzichtet werden, wenn die Hallsensoren gemäß einer vorteilhaften Weiterbildung der Erfindung jeweils den gleichen Abstand von dem Mittelpunkt des Magneten haben. Hierdurch stellt sich in vielen Fällen bereits durch die Montage des Magneten eine gleichmäßige magnetische Vorspannung der Hallsensoren ein, so daß nur noch die übrigen Drehzahlsensoren justiert werden müssen. Weiterhin hat diese Gestaltung den Vorteil, daß die magnetische Feldstärke im Zentrum des Magneten am höchsten ist und daher der maximale Funktionsabstand des erfindungsgemäßen Drehzahlsensors so groß wie möglich gehalten ist.

Der Drehzahlsensor ist einfach herstellbar und besteht aus besonders wenigen Bauteilen, wenn der Magnet und der Hallchip gemäß einer anderen vorteilhaften Weiterbildung der Erfindung in einem gemeinsamen, nach der Justage mit einer Vergußmasse ausfüllbaren Gehäuse angeordnet sind. Durch diese Gestaltung ist das Gehäuse beispielsweise kostengünstig im Spritzgießverfahren herzustellen. Nach der Justage kann das Gehäuse mit einer Vergußmasse ausgegossen werden. Der Magnet wird dadurch dauerhaft in seiner Position gehalten und gleichzeitig wie der Hallchip vor Korrosion geschützt.

Der Magnet wird während der Justage gemäß einer anderen vorteilhaften Weiterbildung der Erfindung ohne zusätzlichen baulichen Aufwand in der vorgesehenen Position in dem Drehzahlsensor gehalten, wenn der Magnet zwischen dem Hallchip und einer Platine des Drehzahlsensors eingespannt ist.

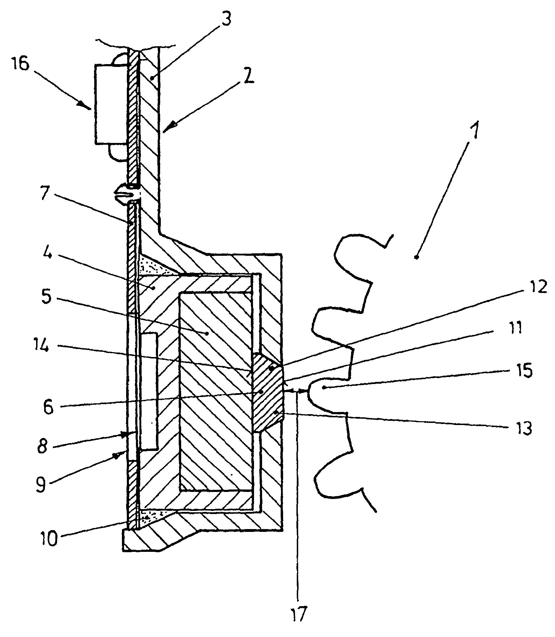

Zur Verdeutlichung des Grundprinzips der Erfindung ist ein Drehzahlsensor, welcher aber nicht unter den Wortlaut der Ansprüche fällt, in der Zeichnung dargestellt und wird nachfolgend beschrieben. Diese Zeichnung zeigt einen vor einem Zahnrad 1 angeordneten Drehzahlsensor 2. Der Drehzahlsensor 2 hat ein Gehäuse 3, in welchem ein in einem Kunststoffkäfig 4 eingefaßter zylindrischer Magnet 5 und ein Hallchip 6 angeordnet sind. Das Gehäuse 3 ist von einer Platine 7 verschlossen, welche im Bereich eines in dem Kunststoffkäfig 4 eingearbeiteten Schlitzes 8 eine Ausnehmung 9 hat. Der Magnet 5 ist mittels einer Vergußmasse 10 in dem Gehäuse 3 befestigt.

Der Hallchip 6 hat an seiner dem Zahnrad 1 zugewandten Seite eine Meßfläche 11 und zwei Hallsensoren 12, 13. Der Hallchip 6 liegt mit seiner der Meßfläche 11 gegenüberliegenden Seite an einer Stirnfläche 14 des Magneten 5. an. Die Hallsensoren 12, 13 erzeugen bei jedem vorbeibewegten Zahn 15 des Zahnrades 1 ein elektronisches Signal. Eine auf der Platine 7 angeordnete elektronische Schaltung 16 gewinnt aus diesen elektronischen Signalen die Drehzahl und den Stellwinkel des Zahnrades 1. Der maximal mögliche Abstand zwischen der Meßfläche 11 und dem Zahnrad 1, bei dem der Drehzahlsensor 2 zuverlässig arbeitet, wird als maximaler Funktionsabstand 17 bezeichnet.

Zur Montage wird der Magnet 5 in das Gehäuse 3 eingesetzt und mit der Platine 7 gegen den Hallchip 6 vorgespannt. Der Magnet 5 ist dadurch drehbar in dem Gehäuse 3 gehalten und gleichzeitig gegen ein Herausfallen gesichert. In dem Schlitz 8 des Kunststoffkäfigs 4 kann man anschließend einen nicht dargestellten Schraubendreher ansetzen und den Magneten 5 verdrehen. Zum Schluß wird der Magnet 5 mit der Vergußmasse 10 in dem Gehäuse 3 befestigt.

## Patentansprüche

1. Drehzahlsensor (2) mit einem zwei Hallsensoren (12, 13) und eine Messfläche (11) aufweisenden Hallchip (6) und mit einem auf der der Messfläche (11) abgewandten Seite des Hallchips (6) zur Erzeugung eines gleichmäßigen magnetischen Feldes an den Hallsensoren (12,13) zur Justage bewegbar gehaltenen Magneten (5), welcher die Form eines Zylinders hat, an seinen Stirnflächen (14) jeweils einen Magnetpol aufweist und mit einer Stirnfläche (14) unmittelbar an dem Hallchip (6) anliegt, wobei der Magnet (5) gegenüber dem Hallchip (6) verdrehbar gehalten ist, **dadurch**
**gekennzeichnet, dass** der Magnet (5) auf seiner dem Hallchip (6) abgewandten Stirnfläche (14) eine Aufnahme für ein Drehwerkzeug hat, wobei die Aufnahme als in den Magneten (5) eingearbeiteter Schlitz (8) ausgebildet ist.

2. Drehzahlsensor nach Anspruch 1, **dadurch gekennzeichnet, daß** die Hallsensoren (12, 13) jeweils den gleichen Abstand von dem Mittelpunkt des Magneten (5) haben.

3. Drehzahlsensor nach Anspruch 1 oder 2, **dadurch gekennzeichnet, daß** der Magnet (5) und der Hallchip (6) in einem gemeinsamen, nach der Justage mit einer Vergußmasse (10) ausfüllbaren Gehäuse (3) angeordnet sind.

4. Drehzahlsensor nach zumindest einem der vorhergehenden Ansprüche, **dadurch gekennzeichnet, daß** der Magnet (5) zwischen dem Hallchip (6) und einer Platine (7) des Drehzahlsensors (1) eingespannt ist.

## Claims

1. Rotational speed sensor (2) having a Hall chip (6) which has two Hall sensors (12, 13) and a measuring surface (11), and having a magnet (5) which is secured in a moveable fashion for the sake of adjustment on the side of the Hall chip (6) facing away from the measuring surface (11), in order to generate a uniform magnetic field at the Hall sensors (12, 13) and which is in the shape of a cylinder, has a magnetic pole on each of its end surfaces (14) and bears with an end surface (14) directly against the Hall chip (6), the magnet (5) being secured in a non-rotatable fashion with respect to the Hall chip (6), **characterized in that** the magnet (5) has, on its end surface (14) facing away from the Hall chip (6), a receptacle for a turning tool, the receptacle being embodied as a slit (8) which is made in the magnet (5).

2. Rotational speed sensor according to Claim 1, **characterized in that** the Hall sensors (12, 13) are each at the same distance from the centre point of the magnet (5).

3. Rotational speed sensor according to Claim 1 or 2, **characterized in that** the magnet (5) and the Hall chip (6) are arranged in a common housing (3) which can be filled with a sealing compound (10) after adjustment.

4. Rotational speed sensor according to at least one of the preceding claims, **characterized in that** the magnet (5) is clamped between the Hall chip (6) and a printed circuit board (7) of the rotational speed sensor (1).

## Revendications

1. Capteur de vitesse angulaire (2) ayant une puce de Hall (6), comportant deux capteurs de Hall (12, 13) et une surface de mesure (11), et un aimant (5), qui est maintenu mobile pour permettre l'ajustage sur le côté de la puce de Hall (6) opposé à la surface de mesure (11 ), qui est destiné à produire un champ magnétique uniforme au niveau des capteurs de Hall (12, 13), qui a la forme d'un cylindre, qui comporte un pôle magnétique sur chacune de ses faces frontales (14) et qui s'applique, avec une face frontale (14), directement sur la puce de Hall (6), l'aimant (5) étant maintenu dans une position orientable par rapport à la puce de Hall (6), **caractérisé par le fait que** l'aimant (5) a , sur sa face f rontale (14) opposée à la puce de Hall (6), un logement pour un outil de rotation, le logement étant conçu comme fente (8) ménagée dans l'aimant (5).

2. Capteur de vitesse angulaire selon la revendication 1 **caractérisé par le fait que** les capteurs de Hall (12, 13) sont chacun à la même distance du centre de l'aimant (5).

3. Capteur de vitesse angulaire selon la revendication 1 ou 2 **caractérisé par le fait que** l'aimant (5) et la puce de Hall (6) sont disposés dans un boîtier (3) commun qui peut être rempli, après l'ajustage, d'une masse de compoundage(10).

4. Capteur de vitesse angulaire selon au moins l'une des revendications précédentes **caractérisé par le fait que** l'aimant (5) est serré entre la puce de Hall (6) et une platine (7) du capteur de vitesse angulaire (1 ).
